# EUROPEAN PATENT APPLICATION

(11) **EP 4 006 334 A1**
(43) Date of publication of application: **01.06.2022**
(21) Application number: 20209749.9
(22) Date of filing: 25.11.2020
(51) Int. Cl.: F03D 1/06, F03D 7/02

(54) **WIND TURBINE ROTOR BLADE**

(71) Applicant: Siemens Gamesa Renewable Energy A/S, 7330 Brande (DK)
(72) Inventor: Junca, Guillem, 7100 Vejle (DK)
(74) Representative: Aspacher, Karl-Georg

(57) **Abstract**

The invention describes a wind turbine rotor blade (20) comprising a deformation arrangement (1), which deformation arrangement (1) comprises a tensioning device (10); an anchor (12); a cable (11) extending in a longitudinal direction along a surface (200) of the pressure side (20P) of the rotor blade (20), wherein the cable (11) has an inboard end (11in) attached to the tensioning device (10) and an outboard end (11out) attached to the anchor (12), which anchor (12) is positioned further outboard than the tensioning device (10); and wherein the tensioning device (10) is configured to adjust the tension of the cable (11) in response to a tensioning device control signal (320) to effect a deformation of the rotor blade (20) in the upwind direction (UW). The invention further describes a wind turbine (2) and a method of operating a wind turbine (2).

## Description

The invention describes a wind turbine rotor blade, a wind turbine, and a method of operating a wind turbine.

### Background

Horizontal-axis wind turbines with long rotor blades must implement some measure of preventing collisions between the rotor blades and the tower. It is usual for rotor blades to undergo some amount of flap-wise bending as a result of wind loading. However, high wind loading from wind gusts or turbulence may result in severe deflection of a rotor blade in the downwind direction, i.e. in the direction of the tower.

The downwind deflection of a rotor blade may be understood as the change in blade tip position relative to its unloaded state, in the direction of the tower. For a rotor blade with a length in the order of 100 m, a downwind deflection in the range of 12 m may be regarded as acceptable, whereas any downwind deflection beyond 15 m may be regarded as severe.

A severely deflected rotor blade may collide with the tower as it passes through the "six o'clock" position. This can be avoided for example by manufacturing "pre-bent" rotor blades that curve into the upwind direction when there is no significant wind loading, and which "straighten out" under high wind loading. Another counter-measure is to construct the wind turbine so that its axis of rotation is tilted upwards from the horizontal, so that the rotor blades are given more clearance in the "six o'clock" position.

It is known to mitigate downward deflections of the rotor blades by adjusting the rotor blade pitch angles. However, the pitch angle is generally set so that the aerodynamic rotor can extract as much energy as possible from the wind.

If the pitch angle is altered to turn the rotor blade out of the wind, the result is a decrease in rotational velocity of the aerodynamic rotor and a corresponding reduction in power output. This conventional approach is therefore regarded as an undesirable but necessary trade-off between damage prevention and power output.

Furthermore, each downwind deflection of the rotor blade results in compressive forces in the rotor blade shell on the suction side. A rotor blade may undergo many thousands of severe deflections every year, and the resulting accruing of fatigue damage may significantly shorten the lifetime of the rotor blade. As a result, fatigue damage from downwind deflections of the rotor blades can contribute significantly to the overall cost of energy.

It is therefore an object of the invention to provide an improved way of mitigating the downwind deflection of a rotor blade.

This object is achieved by the wind turbine rotor blade of claim 1, the wind turbine of claim 10; and the method of claim 13 of operating a wind turbine.

### Description of the invention

According to the invention, the wind turbine rotor blade comprises a deformation arrangement, which deformation arrangement comprises a tensioning device arranged in an inboard region of the rotor blade; an anchor arranged in an outboard region of the rotor blade; and a cable extending over a surface of the pressure side of the rotor blade between the tensioning device and the anchor, wherein the cable has an inboard end attached to the tensioning device and an outboard end attached to the anchor. The deformation arrangement further comprises an interface configured to receive a control signal from a tensioning device control unit. The tensioning device is configured to adjust the tension of the cable in response to the control signal to effect a counter-deformation of the rotor blade in the upwind direction.

A cable can be realised as a Bowden cable, with a wire rope that can move freely within a protective housing. The outer end of the cable is immoveable, since it is fixed to an anchor. The inboard end of the cable can be displaced by the tensioning means, so that a tensile force can develop in the cable. A decision to adjust the cable tension can be made locally by the wind turbine controller, or can be made at a remote location, for example by a wind park controller.

An advantage of the inventive rotor blade is that it can easily modify its shape to counteract a downwind deflection. As explained above, a flap-wise bending moment causes the rotor blade to deflect downwind, towards the tower. The action of pulling on the cable by means of an actuator or tensioning means introduces an axial force in the rotor blade. This axial force is offset from the elastic axis of the rotor blade and therefore causes a bending moment in the opposite direction to the flap-wise moment, i.e. in the upwind direction, thereby bending the rotor blade away from the tower.

The inventive rotor blade allows the extent of deflection to be controlled directly, without any need of modifying the pitch angle. Excessive downwind deflection can therefore be avoided without any reducing power production.

The components of the deformation arrangement are realised according to the physical properties of the rotor blade, for example its elasticity, its mass, its length, etc.

According to the invention, the wind turbine comprises a number of such rotor blades, usually three, mounted to a hub or spinner. The wind turbine comprises a monitoring arrangement that is realised to determine the extent of downwind deflection of a rotor blade from wind loading; and an analysis unit configured to determine a corrective tensile force to be exerted by the deformation arrangement of that rotor blade to effect an upwind deformation that will counteract the downwind deflection. The wind turbine further comprises a tensioning device control unit that issues a corresponding control signal to the interface of that rotor blade's deformation arrangement, which then actuates the tensioning device accordingly to effect the upwind deformation.

The inventive wind turbine can continue to deliver optimum output power even during unfavourable wind conditions such as a high-speed gusts or turbulence, since it is not necessary to pitch the rotor blades out of the wind. Furthermore, the rotor blades of the inventive wind turbine can be protected from fatigue damage arising from vortex-induced vibrations during a stand-still mode. The monitoring arrangement can determine the frequency and amplitude of the vortex-induced vibrations, and the analysis unit can determine a corrective tensile force to be exerted in each "downwind" half-cycle of the vortex-induced vibrations.

The inventive method of operating such a wind turbine comprises the steps of determining an actual or predicted downwind deflection of a rotor blade from wind loading; determining the magnitude of a corrective tensile force to be exerted by the deformation arrangement of that rotor blade to counteract the downwind deflection; generating a tensioning device control signal on the basis of the corrective tensile force magnitude; and issuing the tensioning device control signal to the interface of that rotor blade deformation arrangement.

The inventive method provides a straightforward solution to actively deform the rotor blade in order to compensate for an unwanted deflection due to external loading. The inventive method can be deployed in different situations, for example by actively deflecting the rotor blade in the upwind direction during normal operation in order to prevent a collision between the rotor blade tip and the tower; or in a stand-still mode to counteract vortex-induced vibrations of the rotor blades by actively deflecting a rotor blade in the upwind direction to counteract a downwind deflection.

Particularly advantageous embodiments and features of the invention are given by the dependent claims, as revealed in the following description. Features of different claim categories may be combined as appropriate to give further embodiments not described herein.

In the context of the cable, the terms "first end", "inboard end", "inner end" and "displacement end" are regarded as synonyms and may be used interchangeably herein. Similarly, the terms "second end", "outboard end", "outer end" and "anchor end" are regarded as synonyms and may be used interchangeably herein.

The outboard region of a rotor blade may be understood herein to loosely refer to the outer half of the rotor blade, while the inboard region may be understood to include the rest. The expression "root region" may be understood to comprise the cylindrical root end, and the "transition region" refers to the region between the cylindrical root end and the airfoil.

In the following, it may be assumed that the wind turbine is the conventional type described above, with three rotor blades mounted to a hub. The rotor blades may have been manufactured with a "pre-bent" design, i.e. having an inherent curvature in the upwind direction.

The inventive wind turbine may determine the downwind deflection of a rotor blade in various ways. For example, a rotor blade may be equipped with strain sensors in or on its outer shell or body. Such strain sensors can detect whether the shell is undergoing compression or extension, as will be known to the skilled person. Alternatively or in addition, the flap-wise flexion of the rotor blade under wind loading may be known, i.e. the relationship between wind speed and deflection is well-defined, so that a value of wind speed may be sufficient to determine the degree of downwind deflection. The angular position (or "azimuth angle") of the rotor blade may also be taken into consideration, since wind shear results in greater deflection of a rotor blade at the "12 o'clock" position (azimuth angle is 0°) compared to a rotor blade at the "6 o'clock" position" (azimuth angle is 180°).

The tensioning device of the inventive deformation arrangement may be a winch, preferably an electric winch that is powered by an internal power supply of the wind turbine. Alternately, the tensioning device may be realised using any suitable linear actuator. In the following, without restricting the invention in any way, it may be assumed that the tensioning device is a winch.

Preferably, means are taken to ensure that a cable does not lie on the interior surface of the rotor blade, since friction between cable and rotor blade surface could result in wear or damage. To this end, the inventive deformation arrangement preferably comprises an essentially linear arrangement of cable guides attached to a surface of the pressure side of the rotor blade and constructed to ensure that a cable follows a predefined path. A series of cable guides may be provided to accommodate a single cable, or several cables. Alternatively, each of a plurality of cables can be guided by a dedicated arrangement of cable guides.

The anchor and any cable guides are preferably arranged at the inside surface of the pressure side of the rotor blade. An anchor can be a compact part with a means for receiving the outboard end of a cable, for example a recess to accommodate a nipple at the outer cable end. The anchor can be partially embedded in the body of the rotor blade, preferably during manufacture of the rotor blade. An anchor is preferably made of a non-conductive material to avoid flash-over from elements of the rotor blade's lightning protection system.

Similarly, a cable guide can be partially embedded in the body of the rotor blade at the interior surface of the pressure side. A cable guide preferably has an aperture through which the cable passes, the aperture being at a distance above the interior surface of the pressure side so that the cable always follows a defined path, regardless of the curvature of the rotor blade.

Preferably, all components of the deformation arrangement of a rotor blade are arranged in the interior of that rotor blade. The tensioning device may be installed in the relatively spacious root end of the rotor blade. Because the cable tension may be in the order of several kilonewtons, it is preferable to fasten the tensioning device securely to the body of the rotor blade or to a rigid structure such as a bearing plate (an essentially circular steel plate that closes off the root end of the rotor blade). In some embodiments, it may be preferable to arrange a support structure for the tensioning devices of the rotor blades in the interior of the hub.

The order of magnitude of the cable tension may vary greatly, since it is dependent on factors such as the mass and length of the rotor blade, the target operational range of the system, etc. However, it is expected that the magnitude of the tension will be in the order of rotor blade weight. For this reason, the tensioning device is preferably mounted onto a load-carrying part of the rotor blade or hub structure.

With the components arranged as described above, the deformation arrangement can alter the deflection of the rotor blade in an upwind direction. With a winch as tensioning device, pulling in the cable will cause the rotor blade to bend flap-wise in the upwind direction. Letting out the cable will relax the cable tension and decrease the upwind deflection.

There are various possible configurations of the inventive deformation arrangement. In one embodiment, a single cable extends between the tensioning device and an anchor. In an alternative embodiment, multiple cables are deployed. Multiple cables can terminate at separate anchors. Alternatively, two or more cables can terminate at a common anchor. Similarly, multiple cables can originate at separate tensioning devices. Alternatively, two or more cables can originate at a common tensioning device.

When multiple cables are used, the load can be evenly distributed over each cable. Alternatively, a primary load-transmission arrangement can have a powerful winch and a thick cable, with two or more secondary or backup load-transmission arrangements, each with less powerful winches and thinner cables.

In an embodiment with multiple cables, these can terminate at anchors arranged at intervals along the outboard region of the rotor blade. For example, one cable can extend the length of the rotor blade, terminating at an anchor in the tip end of the rotor blade; one or more cables can extend to anchor(s) at 85% of the rotor blade length; one or more cables can extend to anchor(s) at 70% of the rotor blade length; etc.

The analysis unit of the control arrangement can determine a corrective tensile force that is simultaneously applied to all three rotor blades. However, as explained above, wind shear and rotor blade angular position can determine the amount of downwind deflection during normal operation of the wind turbine, as well as during a stand-still mode. Therefore, in a particularly preferred embodiment of the invention, the analysis unit of the control arrangement is configured to determine a corrective tensile force for each rotor blade independently.

During mild wind conditions in normal operation of the wind turbine, downwind deflection of the rotor blades is generally not severe and no correction is necessary. Therefore, in a preferred embodiment of the invention, the step of computing a corrective tensile force is carried out in unfavourable wind conditions, for example when the wind speed exceeds a minimum threshold, during turbulence, or during high-speed gusts. During a stand-still mode (the wind turbine is not generating output power, and the aerodynamic rotor does not turn or turns only very slowly), the step of computing a corrective tensile force may only be necessary if vortex-induced vibrations are causing downwind deflection of the rotor blades.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind turbine;
Figure 2 illustrates deflection of a rotor blade;
Figure 3 shows a schematic of a rotor blade according to the invention;
Figure 4 shows a block diagram of a control arrangement in an embodiment of the inventive wind turbine;
Figure 5 shows curves associated with the inventive rotor blade during normal operation;
Figure 6 shows curves associated with a conventional rotor blade during normal operation;
Figure 7 and Figure 8 show embodiments of the inventive rotor blade.

In the diagrams, like numbers refer to like objects throughout. Objects in the diagrams are not necessarily drawn to scale.

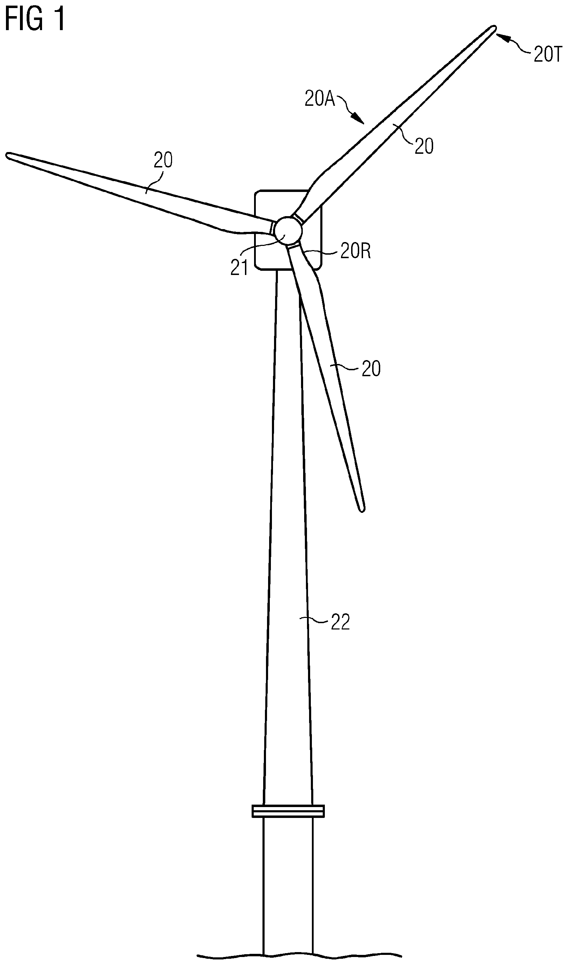

Figure 1 shows a wind turbine 2 of the most common type in use at present. The wind turbine 2 has an aerodynamic rotor comprising three rotor blades 20 attached to a hub 21. Rotation of the aerodynamic rotor causes rotation of a generator rotor, so that output power can be exported by the wind turbine 2.

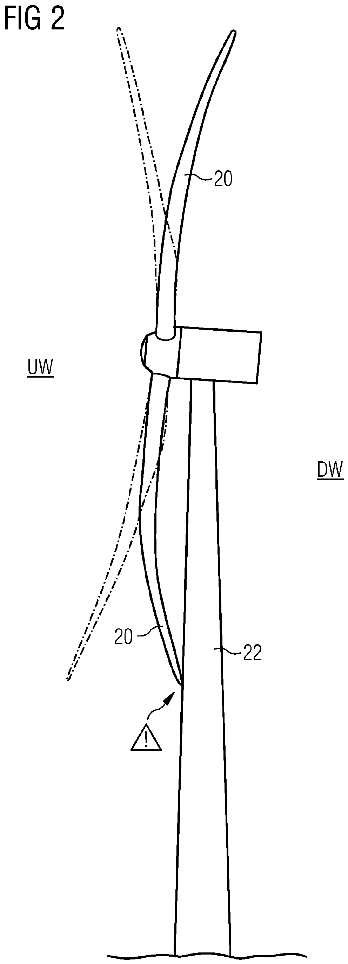

The rotor blades 20 are shaped to optimize the amount of energy that can be extracted from the wind. To this end, a rotor blade 20 has an airfoil portion over much of its length, and the shape of the rotor blade transitions from a generally circular shape at the root end 20R to the flatter airfoil portion 20A, ultimately tapering to a thin tip 20T. The length of a rotor blade can be in the order of 80 m or more. This type of rotor blade may undergo significant deflection in the downwind direction, as illustrated in Figure 2, which shows how the rotor blades 20 of such a wind turbine may be deflected by high wind loading in the downwind direction DW, i.e. in the direction of the tower 22. The downwind side DW and upwind side UW of the aerodynamic rotor are indicated. In this exemplary wind turbine, the axis of rotation is tilted upwards by several degrees and the rotor blades are pre-bent as indicated by the ghost outlines that show their "resting" shape in low wind conditions.

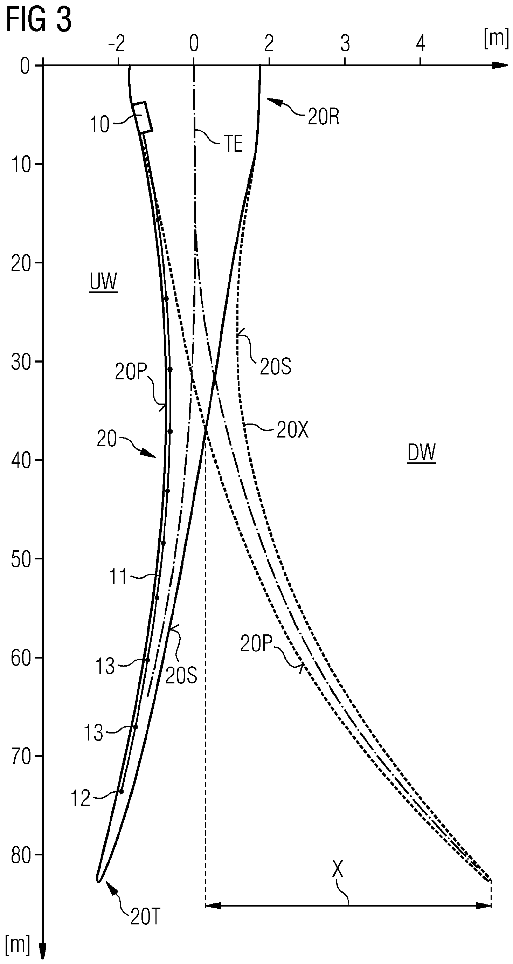

Figure 3 shows a schematic of a rotor blade according to the invention. The diagram is a view of the rotor blade looking at the trailing edge TE. It shall be noted that the axes are not to the same scale. The diameter at the root end 20R is in the order of 3 - 4 m (X-axis), and the rotor blade length is in the order of 80 - 90 m (Y-axis). The pressure side 20P and suction side 20S of the rotor blade 20 are shown as indicated. It shall be assumed that the wind turbine is controlled so that its aerodynamic rotor always faces upwind UW during normal operation.

The diagram shows a deflection shape (dotted line) to indicate the shape of an equivalent conventional rotor blade 20X under high wind conditions without corrective pitch control. Deflection can be measured from a reference, for example relative to a vertical line extending through 0 of the X-axis. The significant tip-to-tower deflection X of the conventional rotor blade 20X can have undesirable effects such as fatigue loading, tower collision, etc. For this reason, a conventional rotor blade is generally pitched out of the wind to decrease the tip-to-tower deflection X, resulting in a reduction in output power during normal operation.

In the inventive rotor blade 20, such extreme downwind deflection is prevented by its deformation arrangement, indicated here schematically to comprise a tensioning device 10, a cable 11, an anchor 12, and a number of cable guides 13. The outboard end of the cable 11 is secured to the anchor 12, which in turn is secured to the interior surface of the pressure side 20P. In response to a tensioning device control signal, the tensioning device 10 can adjust the tension in the cable 11. When the cable tension is increased, the resulting tensile force in the cable 11 causes the rotor blade 20 to deflect in the upwind direction UW, i.e. the pressure side undergoes compression.

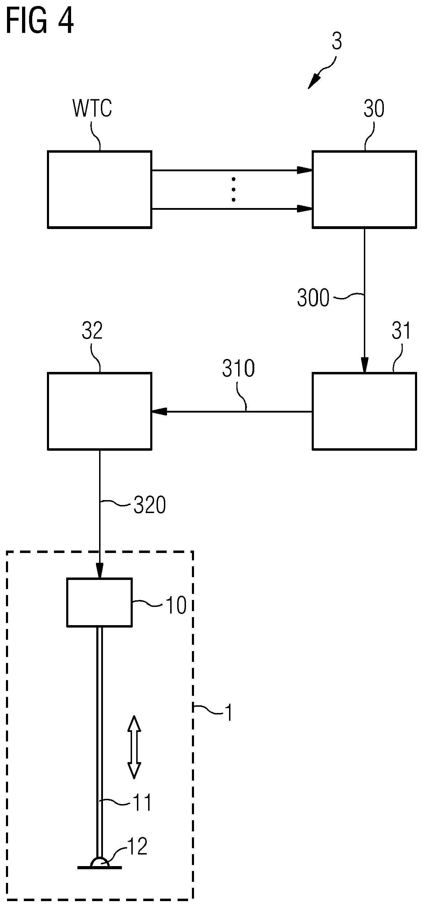

The tensioning device 10 can be an electric winch, for example. A tensioning device control signal 320 to the winch can control the winch motor in the desired manner. The tensioning device control signal 320 can originate from a tensioning device control unit 32 as indicated in Figure 4, which shows a block diagram of a wind turbine control arrangement 3. In this exemplary embodiment, a monitoring arrangement 30 determines the downwind deflection 300 associated with the momentary wind loading on a rotor blade 20. The monitoring arrangement 30 may base its computations on relevant input variables such as wind speed, rotor blade angular position, rotor blade pitch angle etc., which can be supplied by the wind turbine controller WTC. An analysis unit 31 determines the magnitude of the corrective tensile force that must be exerted by the deformation arrangement 1 (indicated here only schematically) of that rotor blade in order to maintain the shape of the rotor blade, i.e. in order to prevent or counteract the predicted downward deflection. The analysis unit 31 may be provided with any relevant information such as the rotor azimuth angle, the rotor blade pitch angle, blade loading, a measurement of tip-to-tower clearance etc., which can be supplied by the wind turbine controller WTC. In one example, the monitoring arrangement 30 may determine that the current wind loading would result in a deflection of 3 m relative to a reference. The analysis unit 31, knowing the present state of the deformation arrangement 1, determines the magnitude of the tensile force that will be required to counteract the wind loading to avoid downwind deflection. For example, depending on the system design and the physical properties of the rotor blade, the magnitude of the tensile force can be in the order of 100 kN. The tensioning device control unit 32 translates the force magnitude 310 into an appropriate tensioning device control signal 320 that is then issued to the tensioning device of the deformation arrangement 1 of that rotor blade. In this way, the control arrangement 3 mitigates, prevents or counteracts the downwind deflection of that rotor blade.

The exemplary control arrangement 3 described above comprises the monitoring arrangement 30, the analysis unit 31, and the tensioning device control unit 32. One or more components of the control arrangement can be realised locally in a wind turbine or at a remote location.

The computations described above can be carried out for all three rotor blades collectively, i.e. a single force magnitude 310 is determined and converted into a corrective tensioning device control signal 320 that is issued to the deformation arrangements of all three rotor blades. However, since the downwind deflection is affected by wind shear and angular rotor blade position, the downwind deflection 300, corrective force magnitude 310 and tensioning device control signal 320 can be computed independently for each rotor blade.

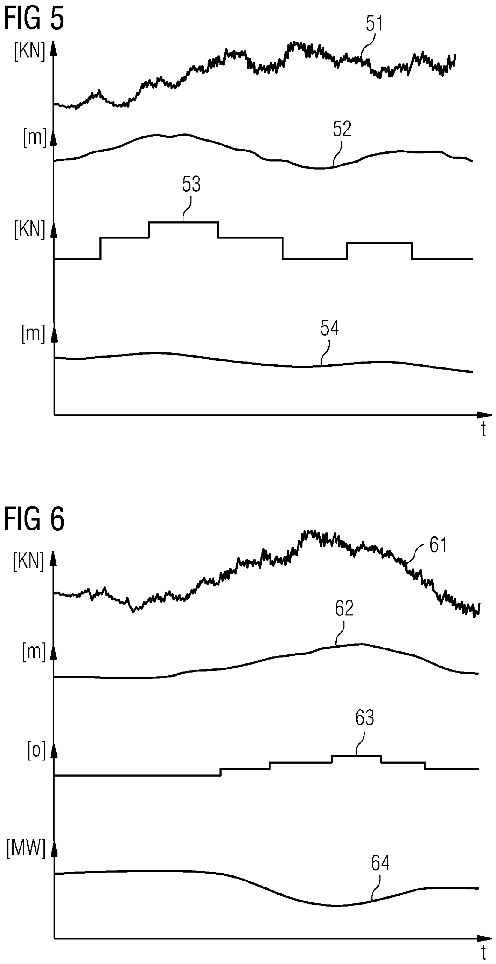

Since wind loading on the rotor blades will fluctuate, the corrective force magnitude 310 can fluctuate accordingly. This is indicated in Figure 5, which shows curves for wind load 51, predicted downwind deflection 52, corrective tensile force magnitude 53 and actual downwind deflection 54 respectively for a rotor blade according to the invention. The diagram shows that corrective tensile force (exerted in the cables of the deformation arrangement) prevents significant downwind deflection. This pre-emptive or corrective deformation of the rotor blades means that the wind turbine controller does not need to adjust the pitch angle to avoid rotor blade damage, but can continue to operate at the favourable high power output. The pitch angle and power output can remain essentially constant. The predicted downwind deflection 52 may correspond to the output of the monitoring arrangement 30, and the corrective tensile force magnitude 53 may correspond to the output 310 of the analysis unit 31 as explained in Figure 4 above.

The conventional approach of adjusting the pitch angle to mitigate downwind deflection is illustrated in Figure 6, which shows curves for wind load 61, downwind deflection 62, pitch angle correction 63 and power output 64 respectively. The diagram illustrates how downwind deflection can only be avoided by adjusting the rotor blade pitch angle, which in turn results in a decrease in output power.

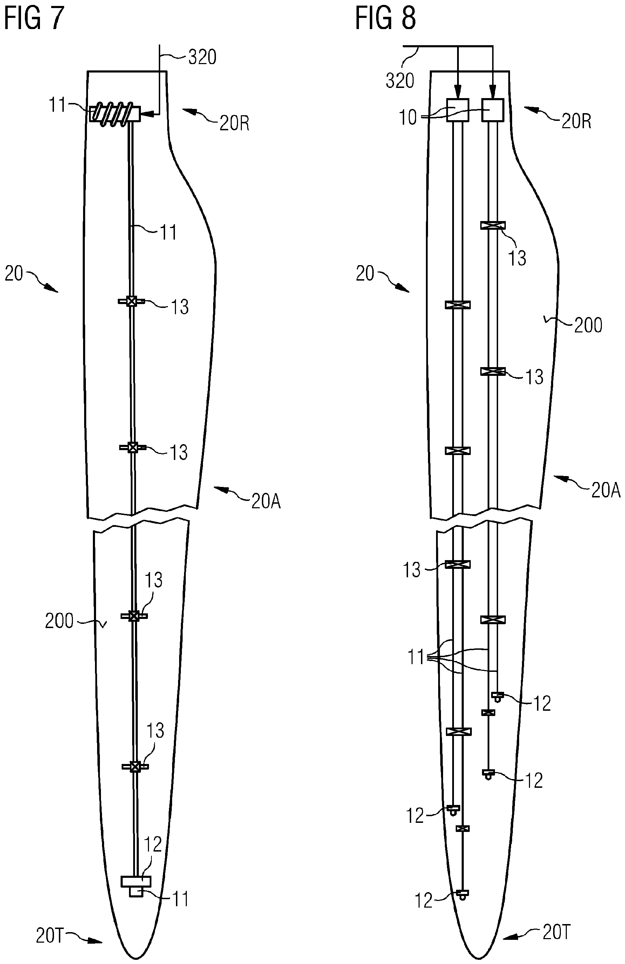

Figure 7 shows a schematic diagram of a possible embodiment of the inventive rotor blade 20, indicating the deformation arrangement 1 in the interior of the rotor blade. The diagram shows an electric winch 10 as tensioning device in the root end of the rotor blade. An anchor 12 is securely attached in an outboard end of the rotor blade, close to the tip 20T. The anchor 12 may have been partially embedded in the body of the rotor blade during a moulding process, for instance. A cable 11 extends from the winch 10 to the anchor 12 and passes through a number of cable guides 13 which ensure that the cable 11 remains at a constant distance from the pressure side interior surface 200. The cable 11 can be realised as a Bowden cable, i.e. as a wire rope protected by a flexible housing. The cable guides 13 are mounted on the interior face of the pressure side, for example by partial embedding during the moulding procedure. The outboard end 11out of the cable 11 is attached to the anchor 12. The inboard end 11in of the cable 11 is connected to the winch 10 and can be displaced by pulling in or letting out, depending on the tensioning device control signal 320 received from a tensioning device control unit as described above.

Figure 8 shows a schematic diagram of another possible embodiment of the inventive rotor blade 20. Here, two tensioning devices 10 are installed in the root end 20R of the rotor blade 20, and four anchors 12 are provided at intervals in the outboard end of the rotor blade. Two cables 11 extend from each tensioning device 10 and terminate separately at anchors 12 (passing through cable guides 13 as described above). The tensioning devices 10 receive the same tensioning device control signal 320, and operate to displace each cable 11 by the same amount.

Although the present invention has been disclosed in the form of preferred embodiments and variations thereon, it will be understood that numerous additional modifications and variations could be made thereto without departing from the scope of the invention. For example, it is possible to arrange one or more components of the deformation arrangement on the outside of the rotor blade. In another embodiment, the tensioning cable could be incorporated into the lightning protection system (LPS) of a rotor blade, for example to act as a down conductor. In such an embodiment, the cable could be electrically connected to a receptor at the rotor blade exterior. Alternatively, an anchor of the deformation arrangement could be realised to also function as a lightning receptor. The principle of the invention could also be applied to other realisations, for example using an arrangement with a toothed belt or chain engaging with a motor-driven sprocket, instead of a cable and motor-driven winch.

For the sake of clarity, it is to be understood that the use of "a" or "an" throughout this application does not exclude a plurality, and "comprising" does not exclude other steps or elements.

## Claims

1. A wind turbine rotor blade (20) comprising a deformation arrangement (1), which deformation arrangement (1) comprises
- a tensioning device (10);
- an anchor (12);
- a cable (11) extending in a longitudinal direction along a surface (200) of the pressure side (20P) of the rotor blade (20), wherein the cable (11) has an inboard end (11in) attached to the tensioning device (10) and an outboard end (11out) attached to the anchor (12), which anchor (12) is positioned further outboard than the tensioning device (10);
and wherein
the tensioning device (10) is configured to adjust the tension of the cable (11) in response to a tensioning device control signal (320) to effect a deformation of the rotor blade (20) in the upwind direction (UW).

2. A wind turbine rotor blade according to claim 1, wherein components (10, 11, 12, 13) of the deformation arrangement (1) are arranged in the interior of the rotor blade (20).

3. A wind turbine rotor blade according to any of the preceding claims, wherein components (10, 11, 12, 13) of the deformation arrangement (1) are arranged to effect a contraction of the rotor blade (20) in an upwind direction.

4. A wind turbine rotor blade according to any of the preceding claims, comprising at least one series of cable guides (13) attached to a surface (200) of the pressure side (20P) of the rotor blade (20) to define the path of a cable (11).

5. A wind turbine rotor blade according to any of the preceding claims, wherein a tensioning device (10) is arranged in the root region (20R) of the rotor blade (20).

6. A wind turbine rotor blade according to any of the preceding claims, wherein the deformation arrangement (1) comprises a plurality of cables (11).

7. A wind turbine rotor blade according to any of the preceding claims, wherein the first ends (11in) of the cables (11) are attached to a single tensioning device (10).

8. A wind turbine rotor blade according to any of the preceding claims, wherein the deformation arrangement (1) comprises a plurality of anchors (13) arranged at intervals along an outboard region of the rotor blade (20).

9. A wind turbine rotor blade according to any of the preceding claims, wherein an anchor (13) is incorporated in the body of the rotor blade (20) during a moulding process.

10. A wind turbine (2) comprising
- a number of rotor blades (20) according to any of claims 1 to 9;
- a monitoring arrangement (30) realised to determine a downwind deflection (300) of a rotor blade (20) from wind loading;
- an analysis unit (31) configured to determine a corrective tensile force (310) to be exerted by the deformation arrangement (1) of that rotor blade (20) to counteract the downwind deflection; and
- a tensioning device control unit (32) configured to issue a corresponding tensioning device control signal (320) to the tensioning device of that deformation arrangement (1) .

11. A wind turbine according to claim 10, configured to determine a corrective tensile force (310) for each rotor blade (20) independently.

12. A wind turbine according to any of claims 10 or 11, wherein each rotor blade (20) comprises an inherent curvature in the upwind direction.

13. A method of operating a wind turbine according to any of claims 10 to 12, which method comprises the steps of
- determining a downwind deflection (52) of a rotor blade (20) from wind loading (51);
- determining the magnitude of a corrective tensile force to be exerted by the deformation arrangement (1) of that rotor blade (20) to counteract the downwind deflection (52) ;
- generating a tensioning device control signal (320) on the basis of the corrective tensile force magnitude (310); and
- issuing the tensioning device control signal (320) to the tensioning device (10) of that rotor blade deformation arrangement (1).

14. A method according to claim 13, wherein the deflection of a rotor blade (20) is determined from a strain sensor arrangement and/or from a wind speed monitoring arrangement.

15. A method according to claim 13 or claim 14, wherein the step of computing a corrective tensile force magnitude (310) is carried out when wind speed exceeds a minimum threshold.
